# EUROPEAN PATENT SPECIFICATION

(11) **EP 0 628 857 B1**
(45) Date of publication and mention of the grant of the patent: **08.09.1999**
(21) Application number: 94303805.9
(22) Date of filing: 26.05.1994
(51) Int. Cl.: G03B 27/73, B41J 5/10

(54) **Photographic printing apparatus having a keyboard**
Fotografisches Kopiergerät mit Tastatur
Appareil de tirage photographique muni d'un clavier

(30) Priority: 07.06.1993 JP 3034593
(43) Date of publication of application: 14.12.1994
(73) Proprietor: NORITSU KOKI CO., LTD., Wakayama-shi, Wakayama (JP)
(72) Inventor: Honomizo, Seiji, c/o Noritsu Koki Co. Ltd., Wakayama-shi, Wakayama (JP)
(74) Representative: Hillier, Peter

(56) References cited:
- CH-A- 651 504
- FR-A- 2 655 911
- GB-A- 2 191 655

## Description

### BACKGROUND OF THE INVENTION

The present invention relates to a photographic printing apparatus having a keyboard comprising entry keys to perform exposure compensation and/or color correction.

In a known photographic printing apparatus, an optimum of the exposure for a desired picture frame of a color negative film is determined by measuring a total transmitted portion of the irradiation of light fallen on the negative frame. It is however difficult to make prints with 100 % perfect exposure because the frames are varied from each other in the conditions of shooting and the type of an object.

For compensation, each frame of the color negative film or its simulated image is viewed and examined by the operator of the photographic printing apparatus. More specifically, the operator enters corrected values of the exposure to a computer using entry keys of a keyboard to produce a print with an optimum result.

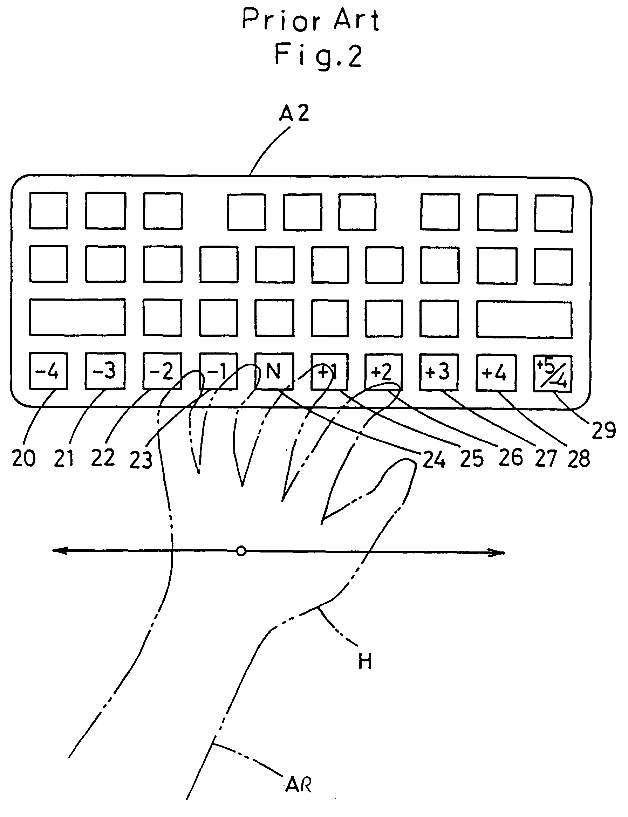

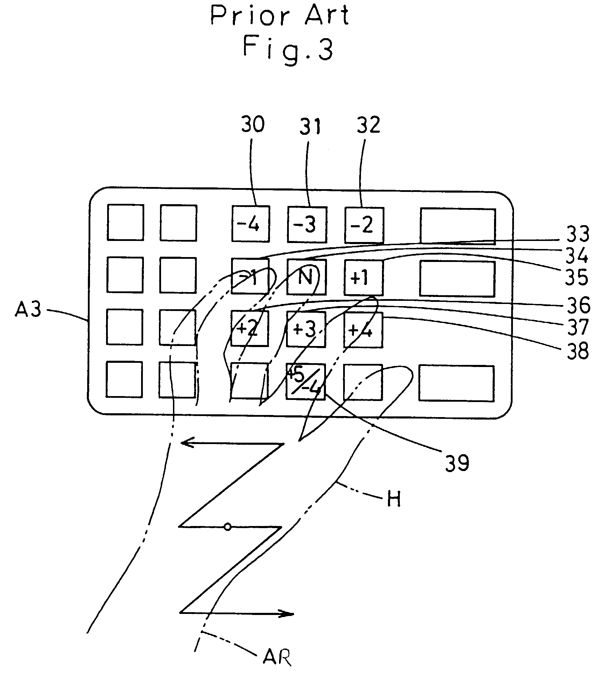

Such a keyboard associated with a conventional photographic printing apparatus comprises a set of entry keys 20 to 29 arranged linearly in a horizontal row on a board base A2 as shown in Fig. 2. Another keyboard shown in Fig. 3 has a set of entry keys 30 to 39 arranged in a matrix on a board base A3, similar to the arrangement of common ten keys.

The former is capable of accommodating a multiplicity of keys in a given space for the purpose of space saving. Its disadvantage is that the lateral movement of a hand H of the operator in selecting desired entry keys is extensive to left and right as defined by the arrow in Fig. 2, thus causing the operator to stretch his or her arm AR.

The arrangement of keys in the latter is not designed to ease the continuous action of operating the keys. In fact, the operator needs to move his or her arm AR in zigzag or crosswise actions as shown in Fig. 3.

As understood, the conventional keyboards for the photographic printing apparatus are rather low in the controllability. Also, their home positions are not obvious making it difficult for beginner operators to learn a blind-touch typing technique.

GB-A-2191655, discloses a keyboard for a color photographic printing apparatus, including a color and density correction key arrangement, a function key arrangement, a color paper type input key arrangement, a start key, a negative inspection key, a print key, a printing condition selection key arrangement, and a printing exposure control mode selection key arrangement. Each group of keys is arranged in a separate block.

In CH 651504-A5, a keyboard for electronic apparatus is disclosed which includes two switch-over keys operated by the thumbs which are operable to select alternative characters for the keyboard keys, which are arranged in arcs.

It is an object of the present invention to provide a photographic printing apparatus having a keyboard comprising a specific arrangement of entry keys which is operatable without the need of an operator moving his or her arm and offers ease of the continuous typing.

The invention provides a photographic printing apparatus having a keyboard, the keyboard comprising a set of data entry keys arranged on a board base, wherein said data entry keys are arranged to enter exposure correction data and/or color tone correction data, and a first subset of said data entry keys is linearly aligned in the home positions for fingers of one hand; characterized in that
all data entry keys in said set of data entry keys lie substantially on the same single arc, wherein a second subset of said data entry keys is disposed along the path of fingers of the operator defined by movements of the wrist of said hand from said home positions towards the left and right of said keyboard, whereby said pivoting movements move said fingers of said hand from said home positions towards the left and right of said keyboard without substantial translation of said wrist.

As the entry keys on the keyboard of the present invention are arranged substantially in an arc line with some at the home position and the others along the path of the operator's fingers defined by the inward and outward movements of the operator's wrist about the home position, they can be hit without extensive movement and with higher continuity. Particularly, the keys off the home position can be accessed by the inward and outward turning of the wrist (or actions of radial and ulnar flexure).

The first subset of data entry keys are linearly aligned in the home positions and will easily be distinguished from the others.

### BRIEF DESCRIPTION OF THE DRAWINGS

Fig. 1 is a plan view of a keyboard for use in a photographic printing apparatus showing an embodiment of the present invention;
Fig. 2 is a plan view of a conventional keyboard in a photographic printing apparatus; and
Fig. 3 is a plan view of another conventional keyboard in a photographic printing apparatus.

### DETAILED DESCRIPTION OF THE PREFERRED EMBODIMENT

A keyboard A for use in a photographic printing apparatus has a plurality of entry keys, N, 1... arranged on its board base A1 for entering corresponding data to correct the exposure and/or the color tone. The entry keys N, 1,... are commonly operated by a left hand.

The center key designated by N (N standing for normal) on its hit surface is for zero correction.

The entry keys arranged on both sides of the center key N are denoted by 1 to 4 and 1A to 4A and carry on top discrete numerals +1 to +4 and -1 to -4 respectively which represent magnitudes of correction.

As the entry keys for smaller increment and decrement (or absolute magnitude) are more frequently used, they are disposed with the smallest (absolute) next to the center key N.

The index finger, middle finger, and third finger are assigned to their respective keys 1, N, and 1A at the home positions. No entry keys are operated by the thumb.

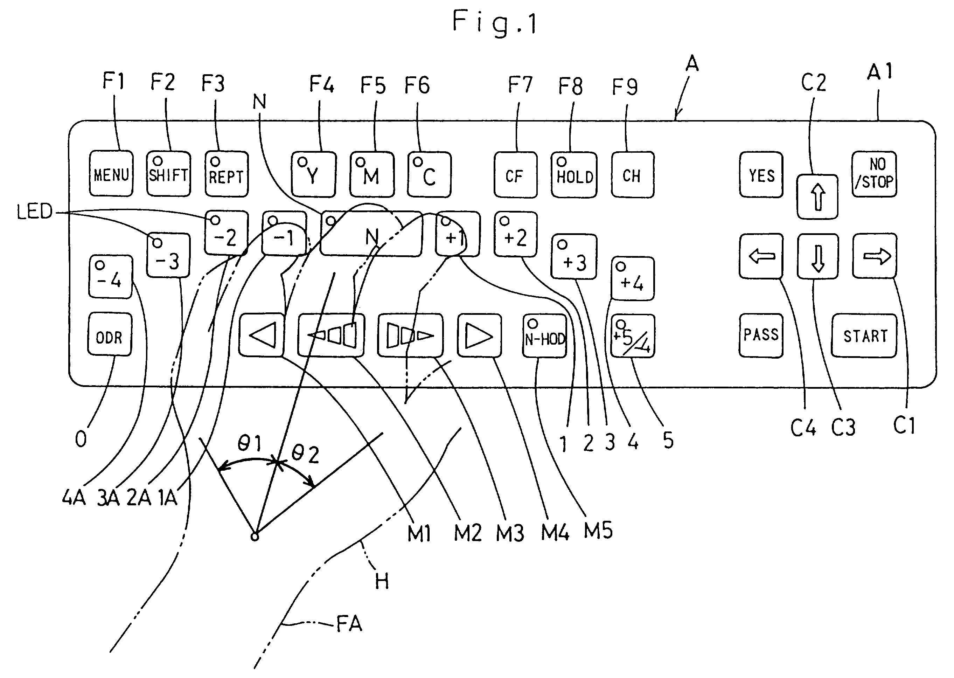

The key denoted by 5 in Fig. 1 carries a marking of +5/-4 which indicates for correction to +5 or more and -4 or less. For example, pressing the key 5 and then the +4 key results in correction to +9.

The key denoted by O is an order key carrying a marking of ODR. This key is for determining the order and is used for advancing each frame of a color negative film.

For control of the exposure, a desired combination of the entry keys N, 1 to 5, and 1A to 4A are used to enter corresponding values. For compensation of the color tone, one of function keys F4 to F6 (Y standing for yellow, M magenta, and C cyan) is first pressed for selection of a color and followed by a combination of the entry keys N, 1 to 5, and 1A to 4A for entry of correcting data.

The entry keys other than 1, N, and 1A at the home position are arranged along the curved path of the fingers defined by the inward and outward turning of the operator's hand H about the home position, while the entire keys N, 1 to 4, 1A to 4A substantially align in an arc.

Each entry key is equipped with a light emitting diode (LED).

When the operator's hand H rests on the keyboard A, his or her wrist FA remains turned inwardly as shown in Fig. 1.

The operator's hand H is turnable outwardly through θ1 or 45 degrees and inwardly through θ2 or 25 degrees. As understood, θ1 is greater than θ2.

This allows the operator's hand H remaining turned inwardly to access with ease to the outside keys 1A, 2A, 3A, and 4A, and the order key 0.

The arrangement of the entry keys is not strictly limited to the path of the fingers defined by the inward and outward movements of the operator's hand H and may be modified or changed within a range which is accessible by reaching out and bending the fingers to satisfy particular design requirements and which lies within the scope of claim 1.

There are a set of control keys M1 to M5 provided inside of (or beneath) the arc arrangement of the entry keys N, 1,... for automatic negative film masking control (not shown), while the function keys F1 to F9 are arranged outside of (or above) the entry keys, so that the board base A1 is saved in space for optimum controls.

The function keys F1 to F9 are marked on the hitting surfaces as shown in Fig. 1.

Also, provided are cursor keys C1 to C4 which are commonly operated by the right hand of the operator.

Although, in the embodiment, the distance between any two adjacent entry keys is 1.7 to 1.9 cm, the hitting force is 0.4 to 0.8 N, the pressing stroke is 0.3 to 0.5 cm, and the board base A1 is tilted at an angle of 5 to 15 degrees, design variations will also be possible within the scope of claim 1.

## Claims

1. A photographic printing apparatus having a keyboard (A), the keyboard (A) comprising a set of data entry keys (N, 1 to 4 and 1A to 4A) arranged on a board base (A1), wherein said data entry keys (N, 1 to 4, 1A to 4A) are arranged to enter exposure correction data and/or color tone correction data, and a first subset (N, 1, 1A) of said data entry keys (N, 1 to 4, 1A to 4A) is linearly aligned in the home positions for fingers of one hand; characterized in that
all data entry keys in said set of data entry keys (N, 1 to 4, 1A to 4A) lie substantially on the same single arc, wherein a second subset (2 to 4, 2A to 4A) of said data entry keys (N, 1 to 4, 1A to 4A) is disposed along the path of fingers of the operator defined by movements of the wrist of said hand from said home positions towards the left and right of said keyboard (A), whereby said pivoting movements move said fingers of said hand from said home positions towards the left and right of said keyboard (A) without substantial translation of said wrist.

2. A photographic printing apparatus having a keyboard (A) as claimed in claim 1, wherein a plurality of control keys (M1 to M5) are arranged on the board base (A1) at a location within the curvature of said single arc.

## Patentansprüche

1. Fotografisches Kopiergerät mit einer Tastatur (A), wobei die Tastatur (A) eine Menge von Dateneingabetasten (N, 1 bis 4 und 1A bis 4A) aufweist, die auf einer Tastaturgrundplatte (A1) angeordnet sind, wobei die Dateneingabetasten (N, 1 bis 4, 1A bis 4A) für die Eingabe von Belichtungskorrekturdaten und Farbtonkorrekturdaten eingerichtet sind, und wobei eine erste Teilmenge (N, 1, 1A) der Dateneingabetasten (N, 1 bis 4, 1A bis 4A) in den Ausgangsstellungen für Finger einer Hand linear angeordnet sind; dadurch gekennzeichnet, daß:
alle Dateneingabetasten in der Menge der Dateneingabetasten (N, 1 bis 4, 1A bis 4A) im wesentlichen auf dem einen gleichen Bogen liegen, wobei
eine zweite Teilmenge (2 bis 4, 2A bis 4A) der Dateneingabetasten (N, 1 bis 4, 1A bis 4A) entlang dem Fingerweg des Bedieners angeordnet ist, der durch die Bewegungen des Handgelenks der Hand aus den Ausgangsstellungen nach links und nach rechts auf der Tastatur (A) definiert ist, wodurch die Schwenkbewegungen die Finger der Hand aus den Ausgangsstellungen nach links und nach rechts auf der Tastatur (A) ohne wesentliche Parallelverschiebung des Handgelenks bewegen.

2. Fotografisches Kopiergerät mit einer Tastatur (A) nach Anspruch 1, wobei mehrere Steuertasten (M1 bis M5) auf der Tastaturgrundplatte (A1) an einer Stelle innerhalb der Krümmung des einen Bogens angeordnet sind.

## Revendications

1. Appareil de tirage photographique comportant un clavier (A), le clavier (A) comprenant un ensemble de touches d'entrée de données (N, 1 à 4 et 1A à 4A) disposées sur un support de clavier (A1), dans lequel lesdites touches d'entrée de données (N, 1 à 4, 1A à 4A) sont disposées de façon à entrer des données de correction d'exposition et/ou des données de correction de ton de couleur, et
un premier sous-ensemble (N, 1, 1A) desdites touches d'entrée de données (N, 1 à 4, 1A à 4A) est aligné de façon rectiligne dans les positions de repos des doigts d'une main; caractérisé en ce que:
toutes les touches d'entrée de données dudit ensemble de touches d'entrée de données (N, 1 à 4, 1A à 4A) se trouvent sensiblement sur le même seul arc, dans lequel
un second sous-ensemble (2 à 4, 2A à 4A) desdites touches d'entrée de données (N, 1 à 4, 1A à 4A) est disposé le long du passage des doigts de l'opérateur défini par les mouvements du poignet de ladite main, depuis lesdites positions de repos en direction de la gauche et de la droite dudit clavier (A), ce par quoi lesdits mouvements de pivotement déplacent lesdits doigts de ladite main desdites positions de repos vers la gauche et la droite dudit clavier (A) sans translation sensible dudit poignet.

2. Appareil de tirage photographique comportant un clavier (A) selon la revendication 1, dans lequel une pluralité de touches de commande (M1 à M5) est disposée sur le support de clavier (A1) à un emplacement situé dans la courbure dudit seul arc.
